**Europäisches Patentamt**

**European Patent Office**

**Office européen des brevets**

(19)

(11) Veröffentlichungsnummer: **0 215 093**
**B1**

(12) **EUROPÄISCHE PATENTSCHRIFT**

(45) Veröffentlichungstag der Patentschrift: **22.08.90**

(51) Int. Cl.⁵: **F 23 B 7/00**

(21) Anmeldenummer: **86901985.1**

(22) Anmeldetag: **12.03.86**

(86) Internationale Anmeldenummer:
**PCT/HU86/00015**

(87) Internationale Veröffentlichungsnummer:
**WO 86/05571 25.09.86 Gazette 86/21**

(54) **Brennbares Mehrstoffgemisch und Verfahren zu seiner Verbrennung.**

(30) Priorität: **12.03.85 HU 91385**

(43) Veröffentlichungstag der Anmeldung:
**25.03.87 Patentblatt 87/13**

(45) Bekanntmachung des Hinweises auf die
Patenterteilung:
**22.08.90 Patentblatt 90/34**

(84) Benannte Vertragsstaaten:
**AT BE CH DE FR GB IT LI LU NL SE**

(56) Entgegenhaltungen:
| | |
|---|---|
| AT-B- 38 134 | DE-A-2 700 833 |
| AT-B- 75 352 | GB-A- 13 572 |
| AT-B- 302 241 | GB-A-2 091 290 |
| CH-A- 76 908 | US-A-2 240 335 |
| CH-A- 236 555 | US-A-4 052 167 |
| DE-A-2 628 966 | US-A-4 095 957 |

(73) Patentinhaber: **SZEGVARI, Gyula**
**Szövetseg u. 65**
**H-8638 Boglarlelle (HU)**

(72) Erfinder: **SZEGVARI, Gyula**
**Szövetseg u. 65**
**H-8638 Boglarlelle (HU)**

(74) Vertreter: **Hansen, Bernd, Dr.rer.nat. et al**
**Hoffmann, Eitle & Partner Patentanwälte**
**Arabellastrasse 4 Postfach 81 04 20**
**D-8000 München 81 (DE)**

**Beschreibung**

Gegenstand der Erfindung
Die Erfindung betrifft ein brennbares Mehrstoffgemisch und ein Verfahren zu seiner Verbrennung.

Stand der Technik
Die Zusammensetzungen der verwendeten Brennstoffe sind in Normen und anderen Vorschriften festgelegt. Gemeinsamer Nachteil der bekannten Feuerungsmaterialien besteht darin, daß während deren Verbrennung der Verbrennungsprozeß gar nicht als ideal zu bezeichnen ist. Das hat zur Folge, daß die ganze Wärmeleistung des Feuerungsmaterials nicht ausgenutzt werden kann, da in der Schlacke eine große Menge von brennbaren Materialien hinterbleibt. Mit der herkömmlichen Verbrennung geht also eine größere Menge von sehr wertvollem Schlackenmaterial verloren.

Die unvollständige Verbrennung bringt noch den Nachteil mit sich, daß mit den Rauchgasen auch eine größere Menge von umweltverschmutzenden Verbrennungsprodukten ausgewaschen wird. Wegen des zur Erfüllung des Energiebedarfs notwendigen riesigen Feuerungsmaterial-Bedarfs verursachen die aus den Rauchgasen austretenden Verbrennungsprodukte bemerkenswerte Umweltschäden. Unter diesen ist am bedeutendsten der sogenannte saure Regen, der durch die in den Rauchgasen befindlichen Wasserkondensate verursacht wird.

Gemeinsames Merkmal der zur Wärmeerzeugung dienenden bekannten Verfahren ist es, daß der größtmögliche Wärmeentzug während der Verbrennung angestrebt wird. Der Verbrennungsprozeß ist also mit Hinsicht auf den Wärmeentzug nicht geregelt. Das Maß des Wärmeentzugs wird in Abhängigkeit von den verschiedenartigen Feuerungsmaterialien nicht verändert bzw. den Anforderungen nicht angepaßt. Dies hat öfters zur Folge, daß die außerhalb eines Wärmebereiches brennbaren Materialien nicht nützlich gemacht werden und ihre Verbrennungswärmen an dem Verbrennungsprozeß, d.h. bei der Wärmeerzeugung, nicht teilnehmen. Diese brennbaren Materialien bleiben teilweise in der Schlacke zurück, teilweise treten sie mit den Rauschgasen und sonstigen Verbrennungsprodukten zusammen aus.

In der DE—OS—2 700 833 wird ein Verfahren beschrieben, bei dem die bei der Verbrennung entstehenden Heißgase in die Reaktionskammer zurückgeleitet werden, wodurch die Verbrennungstemperatur im Feuerraum erhöht werden kann. Vorteilhafter aber wäre es, die Wärme im Brennstoff selbst zurückzuhalten bzw. in diesen zurückzuleiten, wodurch keine höheren Temperaturen im Feuerraum erforderlich wären.

US—A—4 052 167 behandelt ein Heizsystem, um landwirtschaftliche Flächen, auf denen Winterpflanzen gezüchtet werden, zu schützen, und das die Düngung dieser Pflanzen unterstützt. Es wird ein brennbares Mehrstoffgemisch verwendet, welches mindestens einen festen Brennstoff und als weitere Komponente ein nicht brennbares, wärmespeicherndes Material umfaßt. Das Mehrstoffgemisch kann durch Zerkleinern, Mischen sowie Brikettieren der Komponenten hergestellt werden.

AT—B—38 134 beschreibt ein Verfahren zur Behandlung von Braunkohle, bei dem die Kohle mit einem Überzug von in Wasser gelöstem Wasserglas und Soda versehen wird. Dadurch kann ein gleichmässiges Abbrennen bei geringer Ruß- und Rauchbildung der Kohle bewirkt werden.

CH—A—236 555 schließlich befaßt sich mit einem brikettierten, festen Brennstoff, der vorteilhaft in einer brennbaren, z.B. aus Kunststoff bestehenden, Hülle verpackt ist. Dadurch ist es möglich, ohne Anwendung von hohem Druck und ohne Verwendung teurer Pressen und auch ohne teure Bindemittel Briketts herzustellen, die formhaltig sind.

Wesen der Erfindung
Der Erfindung liegt die Aufgabe zugrunde, ein brennbares Mehrstoffgemisch für ein Verfahren zu schaffen, bei dem der Wirkungsgrad der Wärmeerzeugung durch eine möglichst vollständige Verbrennung der Brennstoffe wesentlich erhöht wird und der Restgehalt an brennbaren Stoffen in der Schlacke sowie die Umweltverschmutzung durch die Rauchgase auf ein Minimum reduziert wird.

Die Lösung der Aufgabe besteht darin, als brennbares Material ein homogenes Mehrstoffgemisch einzusetzen, das mindestens einen festen Brennstoff, eine Flüssigkeit auf Silikatbasis, Polyethylen und ein nicht brennbares, wärmespeicherndes Material umfaßt und durch Zerkleinern, Mischen und Brikettieren oder Verpacken der Komponenten hergestellt wird. Die Komponenten werden dabei so gewählt, daß ihre Brenntemperaturbereiche eine ununterbrochene Brennkeite zwischen 170°C—1800°C bilden. Durch die Komponenten ist das Mehrstoffgemisch mit einer äußeren Schutzschicht versehen, die die Verbrennungswärme im Mehrstoffgemisch zurückhält bzw. in die jeweils brennenden Zonen des Mehrstoffgemisches leitet und dadurch immer höhere Verbrennungstemperaturen innerhalb der Brennkette erreicht werden. Damit ist eine kettenartige, vollständige Verbrennung der Komponenten des Mehrstoffgemisches möglich.

In einer vorteilhaften Ausführungsform können die zerkleinerten und gemischten Komponenten des Mehrstoffgemisches als Schüttgut in einen brennbaren Überzug gefüllt werden, der gleichzeitig als eine äußere Schutzschicht zum Zurückhalten bzw. Zurückleiten der Verbrennungswärme in den bzw. in die jeweils brennenden Zonen des Mehrstoffgemisches dient. Der Überzug ist dabei bevorzugt aus Papier, das mit die Flugasche verfestigendem Wasserglas behandelt wurde, ausgebildet. In einer weiteren

2

bevorzugten Ausführungsform kann das brennbare Mehrstoffgemisch außerhalb des Überzugs mit einer wasserdichten Umhüllung aus Polyethylen versehen sein.

Im Sinne der Erfindung ist es schließlich vorteilhaft, wenn das brennbare Mehrstoffgemisch mit mindestens einem Durchgang bzw. mit Vertiefungen versehen ist, die eine Zugwirkung innerhalb des Mehrstoffgemisches für die entstehenden Gase bewirken.

Die Erfindung schließt ein Verfahren zur Wärmeerzeugung ein, bei dem die oben genannten brennbaren Mehrstoffgemische verbrannt werden und die Verbrennungswärme vorwiegend durch Konvektion an die Umgebung abgegeben wird.

Kurze Beschreibung der Zeichnungen

Weitere Einzelheiten der Erfindung werden anhand von Ausführungsbeispielen mit Bezug auf die Zeichnung näher erläutert. In der Zeichnung zeigen:

Fig. 1 einen vertikalen Schnitt einer Ausführungsform des erfindungsgemäßen Brennstoffes für Anwendungen in den Haushalten;

Fig. 2 eine andere Ausführungsform des Brennstoffes für industrielle Anwendungen.

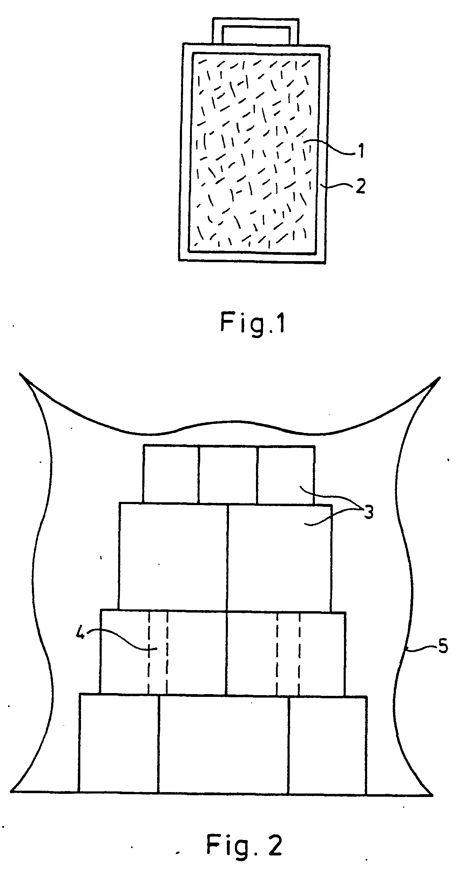

Gemäß der Erfindung besteht das brennbare Material aus einer Mischung von mindestens einem festen Brennstoff, einer Flüssigkeit auf Silikatbasis, Polyethylen und einem nicht brennbaren, wärmespeicherndern Material. Diese Mischung 1 ist in der in Fig. 1 gezeigten Ausführungsform mit einem Überzug 2 versehen, der die Mischung 1 schachtelartig umhüllt. In diesem Ausführungsbeispiel ist die Mischung 1 in geschütteter Form im Inneren des Überzuges 2 angeordnet. Der Überzug 2 hat außer der Rolle des mechanischen Zusammenhaltes auch die Funktion des Wärmeisolierens, des Wasserbindens und des Anzündmaterials. Am vorteilhaftesten und zugleich am billigsten ist es, diesen Überzug 2 aus einer mit einem die Flugasche verfestigenden Silikat behandelten Papierware auszubilden.

In Fig. 2 ist eine Ausführungsform des erfindungsgemäßen brennbaren Mehrstoffgemisches für industrielle Anwendungen dargestellt. Hierbei ist die Mischung 1 nicht in einer Schachtel gelagert, wie in Fig. 1 gezeigt, sondern durch Pressen zu kompakten Einheiten, hier Ziegeln 3, geformt. Diese Ziegel 3 können beliebige Abmessungen und Formen haben; außer der Zeigelform sind also auch andere Gebilde vorstellbar. Als besonders vorteilhaft hat sich die Ausführungsform bewährt, bei der die Ziegel 3 eine zylindrische Form haben. Es kann im weiteren noch vorteilhaft sein, wenn im Inneren der Ziegel 3 etwa in der Mittelachse ein kaminartiger Durchgang 4 ausgebildet ist, wie dies bei zwei der in Fig. 2 dargestellten Ziegel 3 mit gestrichelter Linie gezeigt ist. Dieser längliche Durchgang 4 kann bei der Brikettierung der Ziegel 3 sehr einfach ausgebildet sein.

Wie aus Fig. 2 ersichtlich, ist diese Ausführungsform von außen mit einer Umhüllung 5 us Polyethylen versehen, die in erster Linie die Aufgabe hat, das Entweichen der in der Mischung 1 enthaltenen flüchtigen Substanzen bzw. die bei der Lagerung des Brennstoffes auftretenden weiteren Degradationen zu verhindern.

Die Komponenten des erfindungsgemäßen brennbaren Mehrstoffgemisches werden so ausgewählt, daß deren Brennbereiche addierend eine ununterbrochene Brennkette zwischen 170 und 1800°C ergeben, insbesondere zwischen 190 und 1600°C. Von den bekannten Feuerungsmaterialien sind die folgenden vorteilhaft anwendbar: Kohlenwasserstoff-Derivate, Ethylen-Granulate, verschiedene Torfarten, Abfälle der Holz-, Pharma-, Lebensmittel-, Papier- und Textilindustrie, Stärke, Gasöl, Paraffine und Paraffin-Derivate, bitumenisierende Mittel, Ruß-gummi-Granulat, Ruß-Derivate sowie verschiedene Kohlen und Kohlenderivate, z.B. Steinkohle, Koks, Kohlenklein, Kohlenstaub, Kohlenschlamm und andere Abfälle der Bergwerkindustrie. Die aufgezählten Materialien sind in der Reihe steigender Entzündungspunkte angegeben. Aus den genannten Materialien können beliebige Mischungen mit einem den jeweiligen Anforderungen entsprechenden Verbrennungsbereich hergestellt werden.

Bei dem erfindungsgemäßen brennbaren Mehrstoffgemisch können als nicht brennbare, wärmespeichernde Materialien solche Materialien gewählt werden, die während der Verbrennung als wärmespeicherndes Mittel fungieren, so daß sie die während der exothermen Oxidation frei werdende Wärme für den Verbrennungsprozeß in der direkten Nähe des Verbrennungsprozesses beibehalten. Die im Sinne der Erfindung anwendbaren nicht brennbaren, wärmespeichernden Materialien nehmen während der Verbrennung eine poröse, schwammige Struktur an und üben ihre wärmespeichernde Funktion in dieser Weise aus.

Ein vorteilhaft anwendbares nicht brennbares, wärmespeicherndes Material ist die Mischung von Natronwasserglas und eines Stärkederivats, die unter Wärmeeinwirkung eine Polykieselsäure mit vernetzter Struktur bildet. Ein weiterer Vorteil der Mischung des Natronwasserglases und des Stärkederivats liegt darin, daß sie die Geschwindigkeit der Verbrennungsprozesse mildert sowie während der Aushärtung den Wassergehalt des Brennstoffes bindet.

Ferner können auch Stärke und Zellulose sowie deren Derivate vorteilhaft angewendet werden. Diese Materialien beeinflussen vorteilhaft die Ausbildung einer Gerüststruktur, da sie selbst brennbare Materialien mit leichter Gerüststruktur sind. Sie sind geeignet, kleinere Mengen von Wasser zu binden. Als Stärke- bzw. Zellulosederivate können solche Derivate angewendet werden, die unter Flugaschenbildung und Nitrolyseprozeß verbrennen. Verschiedenartie Abfälle der Landwirtschaft, z.B. Laubabfall, getrocknete Unkraut- und Zierpflanzen, Obstbaumabschnitte; holzindustrielle Abfälle, ferner Furfurol kommen des weiteren in Frage.

Ein vorteilhaft anwendbares nicht brennbares, wärmespeicherndes Material ist auch Perlit (Magnesit); und eine gewisse wärmeisolierende Wirkung üben auch der als Feuerungsmaterial angewendete Torf, der immer eine gewisse Menge von Stärke beinhaltet;

ferner auch der Kohlenstaub und der Ruß aus.

Als Flüssigkeit auf Silikatbasis wird bevorzugt Wasserglas eingesetzt.

Es können zu dem erfindungsgemäßen brennbaren Mehrstoffgemisch zur Verbesserung der Verbrennungseigenschaften auch verschiedenartige Zusatzmaterialien zugemischt werden. Vorteilhaft anwendbare Zusatzmaterialien sind die Verbrennung beschleunigende bzw. hemmende Materialien, die Entzündlichkeit fördernde Materialien und andere ähnliche Zusätze, z.B. die Verbrennung verbessernde und rußbeseitigende Materialien, wie "Konix".

Die speziellen Zusatzmaterialien können vorteilhafterweise die folgenden sein, wobei zugleich auch ihre Wirkung angegeben wird:

Naphtalin löst die in den Feuerungsmaterialien, besonders im Torf, vorhandenen pechbildenden Materialien und fördert in dieser Weise deren komplette Verbrennung. Das Glycerin überträgt den Wassergehalt des Brennstoffes zu der Mischung des Natronwasserglases und des Stärkederivats und fördert in dieser Weise die Abbindung des Wassergehaltes. Die verschiedenen Kohlenwasserstoff-Lösemittel, beispielsweise Benzol oder Xylol, lösen den Kohlenstoffgehalt der Feuerungsmaterialien heraus und ermöglichen dessen Anreicherung, d.h. die Vergrößerung des Heizwertes. Sie lösen ferner noch die schwer verbrennbaren Fett- und Öl- produkte heraus und fördern in dieser Weise deren Verbrennung. Dadurch wird es ermöglichkeit, die verschiedenen Abfälls der Bergwerk- sowie der Lebensmittelindustrie, der Pharmaindustrie und des Haushaltes als Feuerungsmaterial anzuwenden.

Die quantitative Zusammensetzung des erfindungsgemäßen brennbaren Mehrstoffgemisches kann zwischen weiten Grenzen verändert werden. Mit Veränderung des Verhältnisses der Komponenten zueinander können Brennstoffe mit beliebigen, den jeweiligen Anforderungen angepaßten Heizwerten hergestellt werden.

Die Gesamtmenge des Feuerungsmaterials ist meistens 70 bis 99%, insbesondere 80 bis 90%, wobei die Mengen der einzelnen Komponenten des Feuerungsmaterials beliebig variabel sind. Die Menge des nicht brennbaren, wärmespeichernden Materials ist im allgemeinen 1 bis 10%, vorteilhafterweise 3 bis 7%, und die Menge des Zusatzmaterials ist im allgemeinen 1 bis 20%, vorteilhafterweise 5 bis 10%.

Das Wesen der Erfindung wird im weiteren durch Beispiele näher erläutert, in denen bevorzugte Zusammensetzungen für verschiedene Ausgangsmaterialien angegeben sind:

## Beispiel 1

| | |
|---|---|
| 30% | Torf |
| 10% | Magnesit |
| 10% | Flugaschenteer |
| 30% | Holzspäne |
| 0,4% | Konix |
| 0,6% | Natronwasserglas |
| 10% | Koksstaub |
| 5% | Textilabfall |
| 2% | schwerer Kohlenwasserstoff |
| 2% | Überzug aus Polyethylen |
| 100% | |

## Beispiel 2

| | |
|---|---|
| 30% | Holzspäne |
| 10% | Russ |
| 10% | Textilabfall |
| 30% | Kohlenabfall |
| 3% | schwerer Kohlenwasserstoff |
| 0,4% | Konix |
| 0,6% | Natronwasserglas |
| 10% | Magnesit |
| 4% | Teer |
| 2% | Überzug aus Polyethylen |
| 100% | |

EP 0 215 093 B1

Beispiel 3

| 5% | Polyethylen |
|---|---|
| 20% | Kohlenabfall |
| 10% | Gummigranulat |
| 20% | Torf |
| 10% | Sägespäne |
| 10% | Teer |
| 10% | Textilabfall |
| 0,4% | Konix |
| 0,6% | Natronwasserglas |
| 4% | schwerer Kohlenwasserstoff |
| 10% | Silikat |
| 100% | |

Beispiel 4

| 5% | Polyethylen |
|---|---|
| 30% | Torf |
| 30% | Sägespäne |
| 14% | schwerer Kohlenwasserstoff |
| 0,4% | Konix |
| 0,6% | Natronwasserglas |
| 10% | Gummigranulat |
| 10% | Papierabfall |
| 100% | |

Ein Vorteil des erfindungsgemäßen brennbaren Mehrstoffgemisches kann darin gesehen werden, daß dieses eine wesentliche Steigerung des Wirkungsgrades des Verbrennungsprozesses ermöglicht, da dieser Verbrennungsprozeß der optimalen Verbrennung viel mehr angenähert ist als die herkömmlichen Verfahren. Demzufolge wird die hinterbliebene Menge an Material in der Schlacke viel kleiner, was eine bessere Ausnutzung der Wärmeleistung des Brennstoffes bedeutet. Die Menge der mit den Rauchgasen ausgewaschenen umweltverschmutzenden Verbrennungsprodukte wird auch viel kleiner und die Rauchgase werden praktisch säurefrei.

Während der praktischen Versuche mit dem erfindungsgemäßen brennbaren Mehrstoffgemisch und dem damit verbundenen Verfahren wurde überraschenderweise die nicht erwartete Wirkung beobachtet, daß in allen Ausführungsformen mit den entsprechend zusammengestellten Mischungen jeweils die totale Verbrennung in dem Temperaturbereich von 170 bis 1800°C erfolgte. Dies ist auch zurückzuführen auf die bei der Verbrennung der Komponenten des Mehrstoffgemisches gebildete Gerüststruktur, die eine Zugwirkung innerhalb des Mehrstoffgemisches hervorruft und den Verbrennungsprozeß wesentlich intensiviert.

Diese Wirkung kann gesteigert werden, wenn im Inneren der Ziegel 3 ein kaminartiger Durchgang vorgesehen wird.

Zusammenfassend kann festgestellt werden, daß die Anwendung des erfindungsgemäßen Verfahrens mit dem brennbaren Mehrstoffgemisch eine wirtschaftliche und umweltfreundliche Feuerung ermöglicht, wodurch die Energiebedürfnisse besser zu erfüllen sind.

**Patentansprüche**

1. Brennbares Mehrstoffgemisch, das mindestens einen festen Brennstoff umfaßt, und das als weitere Komponenten eine Flüssigkeit auf Silikatbasis, ein nicht brennbares, wärmespeicherndes Material und Polyethylen aufweist, wobei die Komponenten des Mehrstoffgemisches so ausgewählt sind, daß deren Brenntemperaturbereiche eine Brennkette zwischen 170 bis 1800°C, insbesondere zwischen 190 und 1600°C, bilden, und das aus den Komponenten durch Zerkleinern, Mischen sowie Brikettieren oder Verpacken hergestellt ist.

2. Brennbares Mehrstoffgemisch nach Anspruch 1, dadurch gekennzeichnet, daß die zerkleinerten und gemischten Komponenten als Schüttgut in einen brennbaren Überzug gefüllt sind, der gleichzeitig als eine äußere Schutzschicht zum Zurückhalten bzw. Zurückleiten der Verbrennungswärme in den bzw. die jeweils brennenden Zonen des Mehrstoffgemisches dient.

3. Brennbares Mehrstoffgemisch nach Anspruch 2, dadurch gekennzeichnet, daß der Überzug aus Papier besteht, welches mit die Flugasche verfestigendem Wasserglas behandelt ist.

4. Brennbares Mehrstoffgemisch nach Anspruch 2 oder 3, dadurch gekennzeichnet, daß es außerhalb des Überzuges mit einer wasserdichten Umhüllung aus Polyethylen versehen ist.

5

5. Brennbares Mehrstoffgemisch nach einem der Ansprüche 1 bis 4, dadurch gekennzeichnet, daß es mit mindestens einem Durchgang bzw. Vertiefungen zur Zugwirkung innerhalb des Mehrstoffgemisches versehen ist.

6. Verfahren zur Wärmeerzeugung, bei welchem brennbare Stoffe verbrannt und die Verbrennungswärme an die Umgebung vorwiegend durch Konvektion abgegeben wird, dadurch gekennzeichnet, daß man ein durch die Ansprüche 1 bis 5 gekennzeichnetes, brennbares Mehrstoffgemisch verbrennt.

**Revendications**

1. Mélange combustible à plusieurs composants constitué d'au moins un combustible solide et comme autres composants d'un fluide à base de silicate, d'un matériau non-combustible accumulateur de chaleur et de polyéthylène, les composants du mélange combustible étant choisis de façon à ce que leur gamme de températures de combustion forme une chaîne de combustion de l'ordre de 170 à 1800°C, notamment de l'ordre de 190 à 1600°C, ce mélange étant préparé à partir des composants par broyage, mélange ainsi que mise en briquette ou emballage.

2. Mélange combustible à plusieurs composants selon la revendication 1, caractérisé en ce que les composants broyés et mélangés sont introduits en vrac dans un revêtement combustible servant en même temps de couche protectrice extérieure pour maintenir ou recycler la chaleur de combustion dans la ou les zones du mélange à plusieurs composants en cours de combustion.

3. Mélange combustible à plusieurs composants selon la revendication 2, caractérisé en ce que le revêtement est constitué de papier traité à l'aide de silicate permettant de fixer les cendres volantes.

4. Mélange combustible à plusieurs composants selon la revendication 2 ou 3, caractérisé en ce que, outre le revêtement il est pourvu d'une enveloppe imperméable à l'eau en polyéthylène.

5. Mélange combustible à plusieurs composants selon l'une quelconque des revendications 1 à 4, caractérisé en ce qu'il est pourvu d'au moins un passage ou de quelques évidements destinés à exercer un effet de tirage à l'intérieur du mélange à plusieurs composants.

6. Procédé de génération de chaleur dans lequel on fait brûler des substances combustibles et la chaleur de combustion est transmise à l'environnement de préférence par convection, caractérisé en ce que l'on fait brûler un mélange combustible à plusieurs composants suivant l'une quelconque des revendications 1 à 5.

**Claims**

1. Combustible multicomponent mixture which contains at least one solid fuel and has an additional components a silicate based liquid, an incombustible heat storage material and polyethylene, the components of the multicomponent mixture being so selected that their combustion temperature ranges form a combustion chain between 170 and 1800°C, more particularly between 190 and 1600°C, and which is produced from the components by comminution, mixing and briquetting or packing.

2. Combustible multicomponent mixture according to Claim 1, characterized in that the comminuted and mixed components are filled as loose material into a combustible covering which at the same time serves as an outer protective layer for retaining the heat of combustion or returning that heat into the zone or zones of the multicomponent mixture which is or are burning at the moment in question.

3. Combustible multicomponent mixture according to Claim 2, characterized in that the covering is made of paper which has been treated with water glass which solidifies the flue dust.

4. Combustible multicomponent mixture according to Claim 2 or 3, characterized in that it is provided, outside the covering, with a watertight sheath of polyethylene.

5. Combustible multicomponent mixture according to one of Claims 1 to 4, characterized in that it is provided with at least one passage or with depressions to produce a draught action within the multicomponent mixture.

6. Method of generating heat wherein combustible substances are burned and the heat of combustion is given up to the environment predominantly by convection, characterized in that a combustible multicomponent mixture characterized by Claims 1 to 5 is burned.

Fig.1

Fig. 2